# EUROPEAN PATENT APPLICATION

(11) **EP 4 682 719 A1**
(43) Date of publication of application: **21.01.2026**
(21) Application number: 24769977.0
(22) Date of filing: 13.03.2024
(51) Int. Cl.: G06F 9/50

(54) **APPLICATION RESOURCE ALLOCATION PROCESSING METHOD AND APPARATUS, AND DEVICE AND MEDIUM**

(30) Priority: 13.03.2023 CN 202310261107
(71) Applicant: BEIJING YOUZHUJU NETWORK TECHNOLOGY CO. LTD., Beijing 101299 (CN)
(72) Inventor: ZHANG, Xi, Beijing 100028 (CN)
(74) Representative: Grünecker Patent- und Rechtsanwälte PartG mbB
(86) International application number: PCT/CN2024/081547
(87) International publication number: WO 2024/188286

(57) **Abstract**

Embodiments of the present disclosure relate to a method and apparatus for processing application resource allocation, a device and a medium. The method includes: in response to acquiring an invoking operation for an application resource allocation function, when target user group information belongs to predetermined user group information and an initial first task progress is not in a predetermined completion state, determining a predetermined first progress increment of a first task according to the target user group information; adjusting the initial first task progress according to the first progress increment to acquire the adjusted first task progress; determining a first resource increment value corresponding to the first progress increment, and increasing an initial value of first application resource of the first task according to the first resource value to acquire a total value of the first application resource; and when the first task progress reaches a predetermined completion progress, performing allocation processing of the first application resource for the client according to the total value of the first application resource corresponding to the first task progress. Therefore, a completion rate of application tasks is increased, which is further helpful to increase a utilization rate of applications.

## Description

The present application is based on and claims priority to Chinese Patent Application No. 2023102611070, filed on March 13, 2023 and entitled "METHOD, APPARATUS DEVICE, AND MEDIUM FOR PROCESSING APPLICATION RESOURCE ALLOCATION", the entire content of which is incorporated herein by reference.

### FIELD

The present disclosure relates to the field of computer application technologies, in particular to a method and apparatus for processing application resource allocation, a device and a medium.

### BACKGROUND

With the development of computer technologies, daily production and life based on online applications are becoming more and more common, and the applications meeting various needs emerge in an endless stream. Therefore, the problem about a utilization rate of the applications is gradually concerned.

**In** related art, application tasks of the applications are set in advance. Therefore, by completing the application tasks, a client can further increase the utilization rate of the applications. However, such a way of increasing the utilization rate of the applications has a low task completion rate and cannot effectively increase the utilization rate of the applications.

### SUMMARY

The present disclosure provides a method and apparatus for processing application resource allocation, a device and a medium, thereby increasing a completion rate of application tasks, and further increasing a utilization rate of applications.

Embodiments of the present disclosure provide a method for processing application resource allocation. The method includes: determining, in response to acquiring an invoking operation for an application resource allocation function, target user group information to which a client corresponding to the invoking operation belongs, and acquiring an initial first task progress of a first task; determining, when the target user group information is predetermined user group information and the initial first task progress is not in a predetermined completion state, a predetermined first progress increment of the first task according to the target user group information; adjusting the initial first task progress according to the first progress increment to acquire the adjusted first task progress, wherein the adjusted first task progress is greater than the initial first task progress; determining a first resource increment value corresponding to the first progress increment, and increasing an initial value of first application resource of the first task according to the first resource increment value to acquire a total value of the first application resource; and performing, when the first task progress reaches a predetermined completion progress, allocation processing of the first application resource for the client according to the total value of the first application resource corresponding to the first task progress.

The embodiments of the present disclosure further provide an apparatus for processing application resource allocation. The apparatus includes: a first determination module configured to determine, in response to acquiring an invoking operation for an application resource allocation function, target user group information to which a client corresponding to the invoking operation belongs; a first acquisition module configured to acquire an initial first task progress of a first task; a second determination module configured to determine, when the target user group information is predetermined user group information and the initial first task progress is not in a predetermined completion state, a predetermined first progress increment of the first task according to the target user group information; a progress adjustment module configured to adjust the initial first task progress according to the first progress increment to acquire the adjusted first task progress, wherein the adjusted first task progress is greater than the initial first task progress; a second acquisition module configured to determine a first resource increment value corresponding to the first progress increment, and increase an initial value of first application resource of the first task according to the first resource increment value to acquire a total value of the first application resource; and a resource allocation processing module configured to perform, when the first task progress reaches a predetermined completion progress, allocation processing of the first application resource for the client according to the total value of the first application resource corresponding to the first task progress.

The embodiments of the present disclosure further provide an electronic device. The electronic device includes: a processor; and a memory for storing executable instructions of the processor, wherein the processor is configured to read the executable instructions from the memory and execute the instructions to implement the method for processing application resource allocation according to the embodiments of the present disclosure.

The embodiments of the present disclosure further provide a computer-readable storage medium, which stores a computer program, wherein the computer program is configured to execute the method for processing application resource allocation according to the embodiments of the present disclosure.

### BRIEF DESCRIPTION OF THE DRAWINGS

The above and other features, advantages and aspects of various embodiments of the present disclosure will become more apparent in combination with the accompanying drawings and with reference to the following specific implementations. Throughout the drawings, the same or similar reference symbols refer to the same or similar elements. It should be understood that the drawings are schematic, and the components and elements are not necessarily drawn to scale.
FIG. 1 is a schematic flowchart of a method for processing application resource allocation according to an embodiment of the present disclosure;
FIG. 2 is a schematic diagram of an application resource allocation scenario according to an embodiment of the present disclosure;
FIG. 3 is a schematic flowchart of another method for processing application resource allocation according to an embodiment of the present disclosure;
FIG. 4 is a schematic diagram of another application resource allocation scenario according to an embodiment of the present disclosure;
FIG. 5 is a schematic structural diagram of an apparatus for processing application resource allocation according to an embodiment of the present disclosure; and
FIG. 6 is a schematic structural diagram of an electronic device according to an embodiment of the present disclosure.

### DETAILED DESCRIPTION

Embodiments of the present disclosure will be described in more detail below with reference to the accompanying drawings. Although some embodiments of the present disclosure are shown in the drawings, it should be understood that the present disclosure may be implemented in various forms and should not be construed as limited to the embodiments set forth here, instead, these embodiments are provided for a more thorough and complete understanding of the present disclosure. It should be understood that the drawings and embodiments of the present disclosure are merely used for illustrative purposes, and are not used to limit the protection scope of the present disclosure.

It should be understood that various steps recorded in the method implementations of the present disclosure may be executed in a different order and/or in parallel. Furthermore, the method implementations may include additional steps and/or omit executing the illustrated steps. The scope of the present disclosure is not limited in this aspect.

As used herein, the term "comprise/include" and variants thereof are open-ended inclusions, that is, "comprising/including but not limited to". The term "based on" is "at least partially based on". The term "one embodiment" means "at least one embodiment"; the term "another embodiment" means "at least one another embodiment"; and the term "some embodiments" means "at least some embodiments". Related definitions of other terms will be given in the following descriptions.

It should be noted that the concepts such as "first" and "second" mentioned in the present disclosure are merely used to distinguish different apparatuses, modules or units, and are not used to limit the order or interdependence of functions executed by these apparatuses, modules or units.

It should be noted that the modifications of "a" and "a plurality of" mentioned in the present disclosure are schematic rather than limiting, and those skilled in the art should understand that unless the context clearly indicates otherwise, they should be understood as "one or more".

Names of messages or information exchanged among a plurality of apparatuses in the implementations of the present disclosure are only used for illustrative purposes, and are not used to limit the scope of these messages or information.

In order to solve the above problems, the embodiments of the present disclosure provide a method for processing application resource allocation. The method will be introduced in the following in combination with specific embodiments.

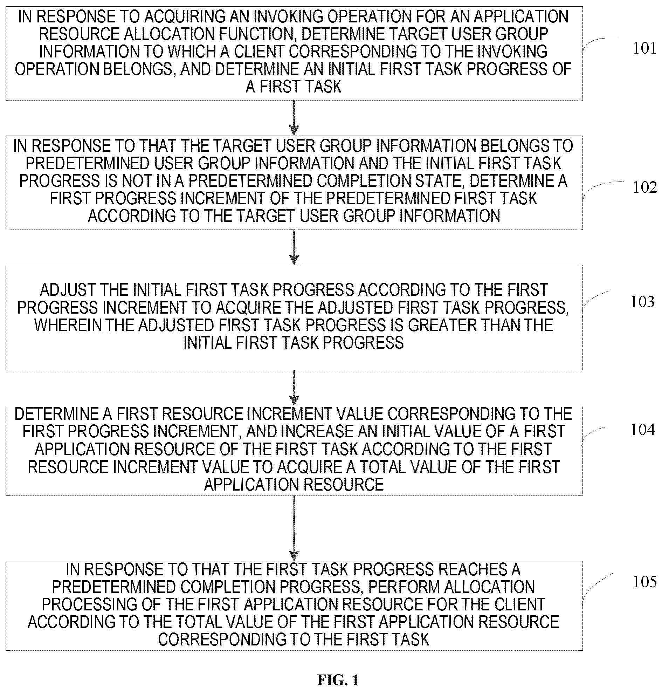

FIG. 1 is a flowchart of a method for processing application resource allocation according to an embodiment of the present disclosure. The method may be executed by an apparatus for processing application resource allocation. The apparatus may be implemented by software and/or hardware, and may generally be integrated in an electronic device. As shown in FIG. 1, the method includes the following steps.

**In** step 101, in response to acquiring an invoking operation for an application resource allocation function, target user group information to which a client corresponding to the invoking operation belongs is determined, and an initial first task progress of a first task is determined.

**In** some embodiments, a specific task content of the first task may be set according to needs of a scenario. For example, the first task may include performing tasks on predetermined service functions for many times. The first progress increment is a completion progress increment of the first task. The initial first task progress is a task completion progress of the first task when the invoking operation for the application resource allocation function is acquired, wherein the first task under the initial first task progress may be in a fully uncompleted state, or the first task under the initial first task progress is in a partially completion state.

**In** some embodiments, in order to increase a utilization rate of an application, the application resource allocation function is predetermined, and corresponding application resources may be allocated after the function is invoked, thereby increasing the number of times that the client uses the corresponding application, and further contributing to increasing the utilization rate of the related application.

In some embodiments, the invoking operation may be a first invoking operation for the application resource allocation function, or any non-first invoking operation for the resource allocation function, which may be set according to the needs of the scenario. In different application scenarios, an operation mode of the invoking operation is different. Examples are as follows.

**In** some embodiments, a page entry of the application resource allocation function may be displayed on a home page of the application, and when a triggering operation for the page entry (which may be a first triggering operation for the page entry or any non-first triggering operation for the page entry after completing part of the first task) is detected, the invoking operation for the application resource allocation function is acquired.

**In** some embodiments, a binding event for open invoking of the application resource allocation function may be defined in advance, and the binding event may be a predetermined voice input event or a predetermined gesture input event. When the corresponding voice input event or gesture input event is detected for the first time, the invoking operation for the application resource allocation function is acquired.

**After** acquiring the invoking operation for the application resource allocation function, in response to acquiring the invoking operation for the application resource allocation function, the target user group information to which the client corresponding to the invoking operation belongs is firstly determined, wherein specific group division of the target user group information may be set according to the needs of the scenario.

**In** step 102, when the target user group information belongs to the predetermined user group information and the initial first task progress is not in a predetermined completion state, the predetermined first progress increment of the first task is determined according to the target user group information.

**In** some embodiments, the predetermined user group information is predetermined, and may be set according to the needs of the scenario. In this embodiment, the corresponding first progress increment is set for the predetermined user group information. That is, when the target user group information belongs to the predetermined user group information and the initial first task progress is not in the predetermined completion state, the first progress increment of the first task corresponding to the target user group information is determined, and the corresponding first task is in the at least partially completion state under the first progress increment.

It should be noted that in different application scenarios, there are different ways to determine the predetermined first progress increment of the first task according to the target user group information. Examples are as follows.

**In** some embodiments, the first task contains at least one first subtask; then a predetermined correspondence (the predetermined correspondence between the predetermined user group information and a task completion number of the first subtasks) may be queried to acquire the task completion number of the first subtasks corresponding to the target user group information; and further, the first progress increment is determined according to the completion number and a total task number of at least one first subtask. That is, the first task progress of the first subtasks may be related to a completion ratio of the first subtasks. Usually, the higher the completion ratio of the first subtasks is, the closer the first task progress is to the completion state.

**In** some embodiments, after determining that the target user group information belongs to the predetermined group information, it is determined that the predetermined progress increment which is predetermined and corresponds to the predetermined group information is the first progress increment, etc.

In step 103, the initial first task progress is adjusted according to the first progress increment to acquire the adjusted first task progress, wherein the adjusted first task progress is greater than the initial first task progress.

In some embodiments, the first task progress of the first task is determined according to the first progress increment. At this time, the first task under the first task progress is in the at least partially completion state, and the task content of the first task in the completion state is more relative to the initial first task progress. For example, the initial task progress of the first task progress is a, and the first progress increment is b, then the corresponding first task progress is a+b. At this time, the completion progress of the first task is further improved for the client belonging to the predetermined user group information.

In step 104, a first resource increment value corresponding to the first progress increment is determined, and an initial value of first application resource of the first task is increased according to the first resource value to acquire a total value of the first application resource.

In some embodiments, in order to further improve the completion efficiency for the first task, the improvement of the first task progress may also directly correspond to the total value of the first application resource of first application resource, wherein the first application resource is any application resource that may be used online and may be dominated by the client. Further, the total value of the first application resource corresponding to the first task progress is determined. For example, the initial value of the first application resource corresponding to the client is determined, the increase value of the first application resource corresponding to the first progress increment corresponding to the first task is determined, and the total value of the first application resource is determined according to a sum of the initial value of the first application resource and the increase value of the first application resource, wherein the total value of the first application resource may be understood as the total number of the first application resource to be collected by the client.

It should be emphasized that in this embodiment, not only is the first task progress of the first task improved for the client belonging to the predetermined user group information, but also the total value of the first application resource to be collected corresponding to the first task progress is allocated to the client, which is helpful to improve the task completion efficiency.

In step 105, when the first task progress reaches a predetermined completion progress, the first application resource is allocated to the client according to the total value of the first application resource corresponding to the first task.

In some embodiments, before the first task progress reaches the predetermined completion progress, a task execution instruction of the client for the first task may also be acquired. For example, when the first task is an application service function use task, a use instruction of the client for the corresponding service function is acquired, and a second progress increment and a second resource increment value which correspond to the task execution instruction of the first task are determined. In some embodiments, when the first task contains a plurality of first subtasks, the second progress increment may be the completion number of the first subtasks, the second resource increment value may correspond to the second progress increment (for example, the second progress increment is 5%, and then the corresponding second resource increment value is 5, etc.), or may also correspond to the specific completion task content corresponding to the task execution instruction of the first task (the second resource increment values corresponding to different task contents are possibly different or the same), and specifically how to correspond may be set according to the needs of the scenario.

Further, the first task progress is increased according to the second progress increment. That is, on the basis of the current first task progress, the second progress increment is further increased to acquire the increased first task progress, and the total value of the first application resource is increased according to the second resource increment value. That is, on the basis of the current total value of the first application resource, the second resource increment value is further increased to realize the improvement of the total value of the first application resource.

In an actual execution process, in order to further increase the task completion rate, the total value of the first application resource of the client may also be displayed on the client, and the first resource increment value corresponding to the second progress increment each time may also be displayed, etc.

Of course, in the actual execution process, if the client cancels the completed related tasks, the total value of the first application resource to be collected currently may be further reduced.

In some embodiments, when the cancelled task is the first subtask, a progress cancellation amount corresponding to a task cancellation instruction is determined in response to acquiring the task execution cancellation instruction of the client for the first task (for example, when the first task contains a plurality of first subtasks, the progress cancellation amount may be a task number of the cancelled first subtasks). For example, when the first task contains a plurality of first subtasks, and the first subtasks are application services, the execution cancellation instruction for first target subtasks is acquired when detecting that an executed service use operation is cancelled at the client, and a predetermined resource value of the cancelled first subtasks is used as an application resource decrement value. According to the application resource decrement value, the total value of the collected first application resource corresponding to the client is reduced, and the first task progress corresponding to the reduction of the progress cancellation amount is determined, thereby ensuring effective execution of related tasks.

In some embodiments, when the first task progress reaches the predetermined completion progress, that is, the first task has been fully completed, the allocation processing of the first application resource is performed for the client according to the total value of the first application resource to be extracted currently.

In different application scenarios, there are different ways to process the allocation of the total value of the first application resource for the client according to the total value of the first application resource to be collected currently. Examples are as follows.

In some embodiments, an allocation path of the client corresponding to the total value of the first application resource is determined, and through the allocation path, the total value of the first application resource corresponding to the total value of the first application resource is directly sent to the client.

In some embodiments, in order to further increase the utilization rate for the application, the client is controlled to display a resource collection page of the total value of the first application resource, wherein the resource collection page includes a resource collection entry and a pushing entry, and the total value of the first application resource to be extracted is sent to a predetermined resource pool of the client according to the total value of the first application resource in response to acquiring a trigger instruction of the client for the resource collection entry.

At least one pushing object is determined according to the total value of the first application resource to be collected in response to acquiring the trigger instruction of the client for the pushing entry, wherein a resource difference between a predetermined application resource value of each pushing object and the total value of the first application resource is less than a predetermined difference threshold. For example, all pushing objects are sorted according to an order of push success rates in the application from high to low, a resource difference between a predetermined application resource value of each pushing object and the total value of the first application resource is calculated according to an order from front to back in a sorting result, and the number of pushing objects of which the resource differences are less than a predetermined difference threshold is counted. When the number reaches a predetermined number threshold, the pushing objects of which the resource differences corresponding to the predetermined number threshold are less than the predetermined difference threshold are determined as the pushing objects to be pushed to the client.

Further, the client is controlled to display push information corresponding to at least one pushing object, thereby facilitating the improvement of the corresponding total value of the corresponding first application resource directly used by the client within the application, and further improving the use efficiency of the application. The push information includes, but is not limited to, picture information and the predetermined application resource value of the pushing object.

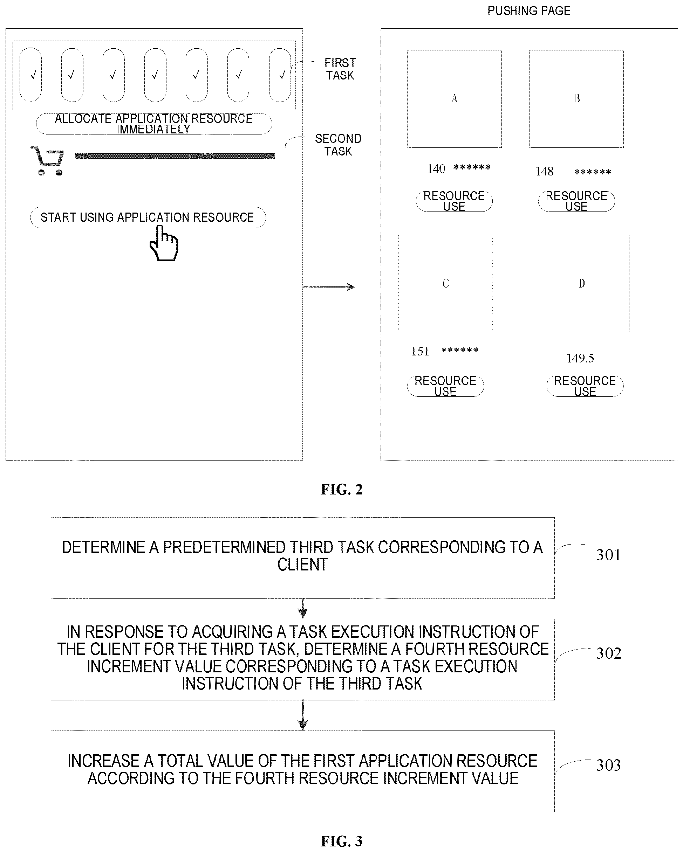

For example, as shown in FIG. 2, when the first task progress reaches a completed progress, it is determined that the total value of the first application resource to be extracted currently by the client is 150, and the predetermined difference threshold is 7. The client is controlled to display the resource collection page of the total value of the first application resource, and the resource collection page includes a resource collection entry "allocate application resources immediately" and a pushing entry "start using application resources". If it is detected that "start using application resources" is triggered, the pushing objects A, B, C and D are determined, wherein the predetermined application resource values corresponding to A, B, C and D are 140, 148, 151 and 149.5 respectively, etc. Therefore, a push page containing A, B, C and D is displayed and the push page contains push information of A, B, C and D. The push information includes pictures, predetermined application resource values and resource use controls of A, B, C and D. If the corresponding resource use control is triggered, the total value of the first application resource to be collected by the client is directly used for the service use of the corresponding pushing object.

In summary, for the method for processing application resource allocation according to the embodiments of the present disclosure, in response to acquiring the invoking operation for the application resource allocation function, the target user group information to which the client corresponding to the invoking operation belongs is determined, and the initial first task progress of the first task is acquired. When the target user group information belongs to the predetermined user group information and the initial first task progress is not in the predetermined completion state, the predetermined first progress increment of the first task is determined according to the target user group information. Further, the initial first task progress is adjusted according to the first progress increment to acquire the adjusted first task progress, wherein the adjusted first task progress is greater than the initial first task progress. The first resource increment value corresponding to the first progress increment is determined. The initial value of the first application resource of the first task is increased according to the first resource value to acquire the total value of the first application resource. When the first task progress reaches the predetermined completion progress, the allocation processing of the first application resource is performed for the client according to the total value of the first application resource corresponding to the first task progress. Therefore, the completion rate of the application tasks is increased, which is further helpful to increase the utilization rate of the application.

Based on the above embodiments, in order to further increase the utilization rate of the application, task types may also be further enriched and other tasks besides the first task may also be set. For example, a second task may be set. In some embodiments, the tasks to be executed by the client further include a second task, wherein the second task may be a sign-in task including a plurality of second subtasks, and each second subtask corresponds to the sign-in task of one day. A second task progress of the second task may be related to a completion ratio of the second subtasks. Generally, the higher the completion ratio of the second subtasks is, the closer the second task progress is to the completion state.

The second task is in a fully uncompleted state under an initial second task progress of the second task. In this embodiment, a task execution instruction of the client for the second task may be acquired (for example, when the second subtasks are sign-in tasks, the task execution instruction for the second task is acquired when it is detected that a predetermined sign-in operation is executed at the client. For example, when the second task is an application service, the task execution instruction for the second task is acquired when it is detected that a predetermined service use operation is executed at the client (for example, the above service use control is clicked to jump to the corresponding service page, and the service use operation is executed on the service page), and then a third progress increment corresponding to the task execution instruction of the second task is determined. For example, when the second task contains a plurality of second subtasks, the corresponding third progress increment is a ratio of the completion number of the second subtasks to the total task number of the second subtasks. Similarly, in this embodiment, a third resource increment value corresponding to the third progress increment is also determined, wherein the third resource increment value may correspond to the third progress increment (for example, the third progress increment is 5%, then the corresponding third resource increment value is 5, etc.), or may also correspond to the specific completion task content corresponding to the task execution instruction of the second task (different task contents possibly correspond to different third resource increment values or the same third resource increment value. For example, when the second task contains a plurality of second subtasks, and the second subtasks are sign-in tasks, the corresponding third resource increment value each time the sign-in task is completed is possibly the same or different), and specifically how to correspond may be set according to the needs of the scenario.

In some embodiments, before the allocation processing of the first application resource is performed for the client according to the corresponding total value of the first application resource, it is also determined that the second task progress has reached the predetermined completion progress. That is, when the second task progress and the first task progress both have reached the completion progress, that is, all the second tasks and all the first tasks have been executed, the corresponding first application resource are allocated to the client. That is, the total value of the first application resource to be extracted currently by the client is determined, wherein the total value of the first application resource to be collected is acquired after the second task and the first task are completed.

It is easy to understand that if only the second task or only the first task is completed, the client will continue to be reminded of completing the remaining task in the second task or the first task. Therefore, the second task and the first task are regarded as main tasks, and relevant application resources will be allocated only after the main tasks are completed.

In the embodiments of the present disclosure, in order to further increase the utilization rate of the application, other side tasks (a third task in this embodiment) other than the main tasks may also be set, and the other side tasks may be selectively executed. That is, when the second task and the first task have uncompleted tasks, even if the third task is completed, the allocation opportunity of the total value of the first application resource is not met, or even if the third task is not completed, but both the second task and the first task are completed, it is considered that the allocation opportunity of the total value of the first application resource is met.

In some embodiments, as shown in FIG. 3, before the second task progress and the first task progress both reach the completion progress, the method further includes the following steps.

In step 301, a predetermined third task corresponding to the client is determined.

In some embodiments, the third task may be any task for increasing the task completion rate, for example, may be a task of watching promoted videos corresponding to the application, etc. The third task may be updated in real time according to a predetermined update cycle. The third task corresponding to a current update cycle is displayed on the client. The third task may also be a prescribed predetermined task. For example, the third task is enabled to correspond to the corresponding second subtask in the second task in advance, and the third task of the current client is determined according to the second subtask to be executed currently.

In some embodiments, in order to prompt the client to complete the corresponding task (the first task, the second task, the third task, etc.) conveniently, the client may be prompted. For example, after the task execution instruction is acquired, the next task content to be completed of the target task corresponding to the task execution instruction is determined. For example, when the second task is prompted, if the second task contains a plurality of second subtasks, the second subtask to be completed currently may be determined according to the second task progress, wherein an execution order of at least one second subtask may be set in advance, and the next second subtask in the corresponding execution order may be determined as the second subtask to be completed currently according to the second task progress. Similarly, when the first task is prompted, if the first task contains a plurality of first subtasks, the first subtask to be completed currently may be determined according to the first task progress.

Further, the client is controlled to display task execution prompt information corresponding to the task content to be completed currently, and the client is controlled to display the task execution prompt information for the task content to be completed currently. In some embodiments, the specific prompt content and prompt mode of the task execution prompt information may be set according to the needs of the scenario.

For example, if the second task contains a plurality of second subtasks and the second subtasks are sign-in tasks, the task execution prompt information corresponding to the second subtask may include the number of sign-in days and a sign-in control corresponding to each second subtask; and if the first task contains a plurality of first subtasks and the first subtasks are service use operations related to an application service, the task execution prompt information may include service use prompt information, a service use control, etc.

Similarly, the third task may also be prompted for task execution, that is, when the third task contains a plurality of third subtasks, the next third subtask to be executed may be determined, the task execution prompt information of the next third subtask to be executed is displayed, etc.

In some embodiments, the second task, the first task and the third task may be displayed in any style on the corresponding task execution page, and the task execution prompt information of the third task may include the task content corresponding to the third task and a corresponding task execution jump control. In some embodiments, in order to increase a completion rate of the third task, a third resource increment value of the first resource acquired after completion may also be displayed in the task execution prompt information of the third task; and when it is detected that the task execution jump control is triggered, the corresponding task execution page of the third task will be jumped.

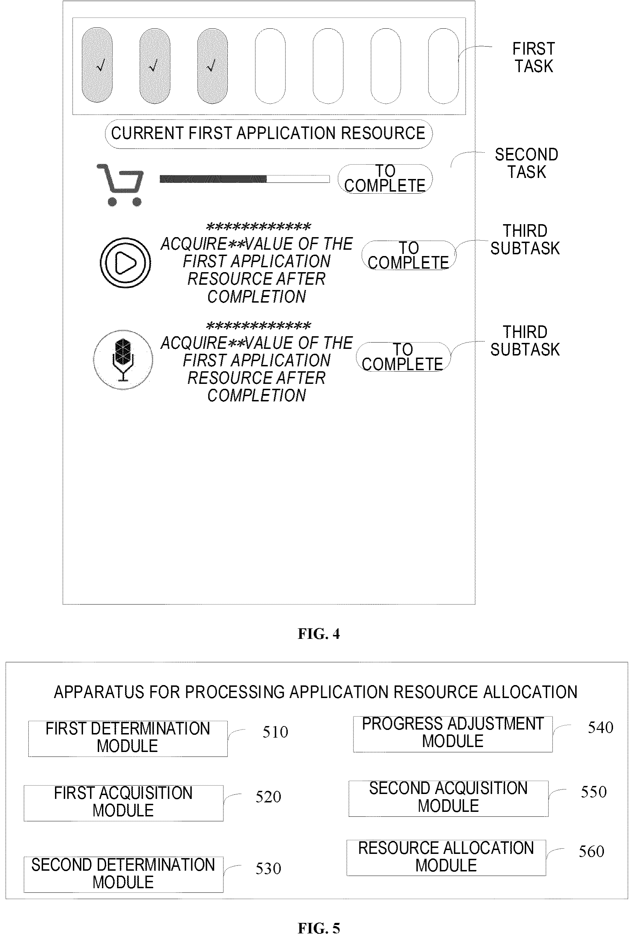

For example, as shown in FIG. 4, when the second task contains a plurality of second subtasks, at least one second subtask of the second task may be displayed at the top of the corresponding task execution page. In order to distinguish an execution state of each second subtask conveniently, the currently completed second subtask may be highlighted by color (highlighting is represented by gray filling in the figure), and the first task and the third task are displayed in the form of a task list, wherein at least one third subtask contained in the third task may be displayed as a separate list unit, and the first task progress of the first task may be indicated by a progress bar.

In step 302, in response to acquiring the task execution instruction of the client for the third task, a fourth resource increment value corresponding to the task execution instruction of the third task is determined.

In step 303, the total value of the first application resource is increased according to the fourth resource increment value.

In some embodiments, the task execution instruction of the client for the third task is acquired, the fourth resource increment value corresponding to the task execution instruction of the third task is determined, and the total value of the first application resource is increased according to the fourth resource increment value. Similarly, in this embodiment, the fourth resource increment value corresponding to the third progress increment is also determined, wherein the fourth resource increment value may correspond to the specific completion task content corresponding to the task execution instruction of the third task (the fourth resource increment values corresponding to different task contents are possibly different or the same), and specifically how to correspond may be set according to the needs of the scenario.

Therefore, the total value of the first application resource is not only related to the second task and the first task, but also can be increased through the execution of the third task, wherein a maximum total value of the first application resource that can be achieved after the second task, the first task and the third task are all executed, and the total value of the first application resource to be collected currently by the client may be calculated. The progress of the total value of the first application resource to be collected currently relative to the maximum total value of the first application resource is displayed at the client with a progress bar and the like, thereby further improving the task completion efficiency.

In some embodiments, in order to further improve the task completion efficiency of the client, second application resource may also be allocated to the client, wherein the second application resource may be understood as any resource that can be used by the client at any time, and different from the total value of the first application resource, and there is no need to wait until all the corresponding tasks are completed.

In this embodiment, after the task execution instruction is acquired, it is detected whether the client satisfies a predetermined application resource pushing condition.

In different application scenarios, the application resource pushing conditions are different. In some embodiments, the application resource pushing condition may be that the completed task content corresponding to the task execution instruction belongs to predetermined task content, and if belonging to the predetermined task content, it is determined that the predetermined application resource pushing condition is met after the corresponding task content is completed. In some embodiments, the application resource pushing condition may be that completion time of the completed task content belongs to pushing time of the second application resource. That is, a pushing time period of the second application resource is set according to the scenario. When the completed completion time belongs to the pushing time of the second application resource, it is determined that the predetermined application resource pushing condition is met. In some embodiments, push user group information for pushing the second application resource may be randomly generated, and when the client belongs to the push user group information, it is determined that the predetermined application resource pushing condition is met.

Further, under the condition that the client satisfies the application resource value pushing condition, a second application resource value of the second application resource corresponding to the client is determined, wherein the second application resource value may be randomly selected from the currently pushable second application resource, or may also be bound in advance. Further, a collection prompt message for the second application resource is sent to the client, so that the client conveniently collects the corresponding second application resource.

In some embodiments, in order to further increase the task completion rate, an opportunity of allocating the total value of the first application resource in advance may also be provided. For example, after the task execution instruction is acquired, whether the client satisfies a predetermined resource collection condition of the total value of the first application resource is detected. In some embodiments, a random drawing game may be displayed on the client, and whether the predetermined resource collection condition is met currently is randomly determined according to the random drawing confirmation operation at the client.

Furthermore, under the condition that the predetermined resource collection condition is met, the client is controlled to display resource early-collection prompt information. In some embodiments, the resource early-collection prompt information may include a collection control that can be randomly collected currently, the number of times of random collection and the like. In some embodiments, the number of times of random collection may be randomly generated, and in other alternative implementations, it may also be determined in other ways according to the needs of the scenario.

In response to acquiring a resource early-collection confirmation instruction executed by the client according to the resource early-collection prompt information, for example, when it is detected that the client triggers the collection control that can be randomly collected, the resource early-collection confirmation instruction executed by the client according to the resource early-collection prompt information is acquired, and then an early-collection resource is determined, wherein the early-collection resource is less than the total value of the first application resource to be extracted currently by the client. In some embodiments, the mode of determining the early-collection resource may be any random algorithm. The total value of the first application resource is allocated to the client according to an early-collection resource value. The total value of the first application resource to be extracted by the client is reduced according to the early-collection resource value.

It should be noted that in the embodiments of the present disclosure, in order to facilitate the client to complete the corresponding tasks, and intuitively embody the total value of the first application resource and the second application resource value which can be acquired after the current subtask to be executed is completed, relevant reminding processing may be performed in any style at any desired time. For example, when the second task contains a plurality of second subtasks, after the current second subtask is completed, the total value of the first application resource that can be acquired after the next second subtask is completed may be displayed in the form such as a pop-up window, so as to improve the completion efficiency of the second task. For example, how many subtasks still need to be executed from completion of the relevant task currently may be prompted in a text style.

In summary, compared with the traditional technical solution, the technical solutions according to the embodiments of the present disclosure have the following advantages.

In the solution of processing application resource allocation according to the embodiments of the present disclosure, in response to acquiring the invoking operation for the application resource allocation function, the target user group information to which the client corresponding to the invoking operation belongs is determined, and the initial first task progress of the first task is acquired. When the target user group information belongs to the predetermined user group information and the initial first task progress is not in the predetermined completion state, the predetermined first progress increment of the first task is determined according to the target user group information. Further, the initial first task progress is adjusted according to the first progress increment to acquire the adjusted first task progress, wherein the adjusted first task progress is greater than the initial first task progress, the first resource increment value corresponding to the first progress increment is determined, and the initial value of the first application resource of the first task is increased according to the first resource value to acquire the total value of the first application resource. When the first task progress reaches the predetermined completion progress, the allocation processing of the first application resource is performed for the client according to the total value of the first application resource corresponding to the first task progress. Therefore, the completion rate of the application tasks is increased, which is helpful to increase the utilization rate of the applications.

In order to realize the above embodiments, the present disclosure further provides an apparatus for processing application resource allocation.

FIG. 5 is a schematic structural diagram of an apparatus for processing application resource allocation according to an embodiment of the present disclosure. The apparatus may be implemented by software and/or hardware, and may generally be integrated into an electronic device to perform application resource allocation processing. As shown in FIG. 5, the apparatus includes a first determination module 510, a first acquisition module 520, a second determination module 530, a progress adjustment module 540, a second acquisition module 550 and a resource allocation module 560, wherein
the first determination module 510 is configured to determine, in response to acquiring an invoking operation for an application resource allocation function, target user group information to which a client corresponding to the invoking operation belongs;
the first acquisition module 520 is configured to acquire an initial first task progress of a first task;
the second determination module 530 is configured to determine, when the target user group information is predetermined user group information and the initial first task progress is not in a predetermined completion state, a predetermined first progress increment of the first task according to the target user group information;
the progress adjustment module 540 is configured to adjust the initial first task progress according to the first progress increment to acquire the adjusted first task progress, wherein the adjusted first task progress is greater than the initial first task progress;
the second acquisition module 550 is configured to determine a first resource increment value corresponding to the first progress increment, and increase an initial first application resource value of the first task according to the first resource increment value to acquire a total value of the first application resource; and
the resource allocation processing module 560 is configured to perform, when the first task progress reaches a predetermined completion progress, allocation processing of the first application resource for the client according to the total value of the first application resource corresponding to the first task progress.

The apparatus for processing application resource allocation according to the embodiment of the present disclosure can execute the method for processing application resource allocation according to any embodiment of the present disclosure, and has corresponding functional modules and beneficial effects of executing the method, and their implementation principles are similar and will not repeated in detail here.

In order to realize the above embodiments, the present disclosure further provides a computer program product, including computer programs/instructions. The computer programs/instructions, when executed by a processor, implement the method for processing application resource allocation in the above embodiments.

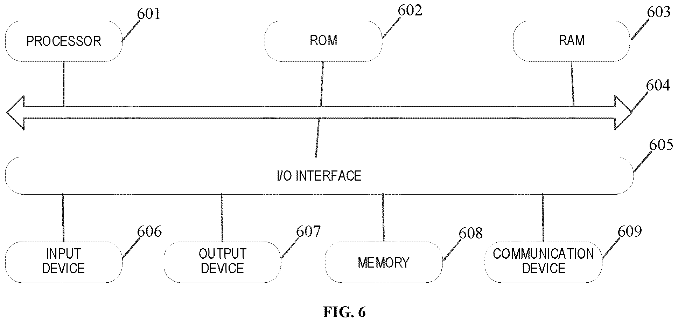

FIG. 6 is a schematic structural diagram of an electronic device according to an embodiment of the present disclosure.

Referring specifically to FIG. 6 below, there is shown a structural schematic diagram of an electronic device 600 suitable for implementing the embodiments of the present disclosure. The electronic device 600 in the embodiment of the present disclosure may include, but is not limited to, a mobile terminal such as a mobile phone, a notebook computer, a digital broadcast receiver, a personal digital assistant (PDA), a tablet computer (PAD), a portable multimedia player (PMP) and a vehicle-mounted terminal (for example, a vehicle-mounted navigation terminal), and a fixed terminal such as a digital TV and a desktop computer. The electronic device shown in FIG. 6 is merely an example, and should not bring any limitation to the functions and use scope of the embodiments of the present disclosure.

As shown in FIG. 6, the electronic device 600 may include a processor (such as a central processing unit or a graphics processing unit) 601, which may execute various appropriate actions and processing according to a program stored in a read-only memory (ROM) 602 or a program loaded from a memory 608 into a random access memory (RAM) 603. In the RAM 603, various programs and data required for the operations of the electronic device 600 are also stored. The processor 601, the ROM 602 and the RAM 603 are connected to each other through a bus 604. An input/output (I/O) interface 605 is also connected to the bus 604.

Generally, the following apparatuses may be connected to the I/O interface 605: an input device 606 including, for example, a touch screen, a touch pad, a keyboard, a mouse, a camera, a microphone, an accelerometer, a gyroscope, etc.; an output device 607 including, for example, a liquid crystal display (LCD), a loudspeaker, a vibrator, etc.; a memory 608 including, for example, a magnetic tape, a hard disk, etc.; and a communication device 609. The communication device 609 may allow the electronic device 600 to perform wireless or wired communication with other devices to exchange data. Although FIG. 6 shows the electronic device 600 with various apparatuses, it should be understood that it is not required to implement or have all the apparatuses shown. More or fewer apparatuses may alternatively be implemented or provided.

In particular, according to the embodiments of the present disclosure, the process described above with reference to the flowchart may be implemented as a computer software program. For example, the embodiment of the present disclosure includes a computer program product, including a computer program carried on a non-transitory computer-readable medium, and the computer program contains program codes for executing the method shown in the flowchart. In such an embodiment, the computer program may be downloaded and installed from the network through the communication device 609, or installed from the memory 608 or from the ROM 602. When the computer program is executed by the processor 601, the above functions defined in the methods for processing application resource allocation according to the embodiments of the present disclosure are executed.

It should be noted that the above computer-readable medium of the present disclosure may be a computer-readable signal medium or a computer-readable storage medium or any combination of the two. The computer-readable storage medium may be, for example, but is not limited to an electrical, magnetic, optical, electromagnetic, infrared, or semiconductor system, apparatus or device, or any combination of the above. More specific examples of the computer-readable storage medium may include, but are not limited to, an electrical connection with one or more wires, a portable computer disk, a hard disk, an RAM, an ROM, an erasable programmable ROM (EPROM or flash memory), an optical fiber, a portable compact disk-ROM (CD-ROM), an optical storage device, a magnetic storage device, or any suitable combination of the above. In the present disclosure, the computer-readable storage medium may be any tangible medium containing or storing a program, and the program may be used by or in combination with an instruction execution system, apparatus or device. In the present disclosure, the computer-readable signal medium may include a data signal propagated in baseband or as part of a carrier wave, where computer-readable program codes are carried. This propagated data signal may adopt many forms, including but not limited to an electromagnetic signal, an optical signal or any suitable combination of the above. The computer-readable signal medium may also be any computer-readable medium other than the computer-readable storage medium, and the computer-readable signal medium may send, propagate or transmit a program for use by or in connection with an instruction execution system, apparatus or device. The program codes contained in the computer-readable medium may be transmitted by using any suitable medium, including but not limited to: wires, optical cables, radio frequency (RF) and the like, or any suitable combination of the above.

In some embodiments, the client and a server may communicate with any currently known or future developed network protocol, such as a HyperText Transfer Protocol (HTTP), and may be interconnected with digital data communication in any form or medium (for example, a communication network). Examples of the communication network include a local area network (LAN), a wide area network (WAN), an internet work (for example, the Internet) and an end-to-end network (for example, an ad hoc end-to-end network), as well as any currently known or future developed network.

The above computer-readable medium may be included in the electronic device, or may exist alone without being assembled into the electronic device.

The above computer-readable medium carries one or more programs, and the above one or more programs, when executed by the electronic device, cause the electronic device to: determine, in response to acquiring an invoking operation for an application resource allocation function, target user group information to which a client corresponding to the invoking operation belongs, and acquire an initial first task progress of a first task; determine, when the target user group information is predetermined user group information and the initial first task progress is not in a predetermined completion state, a predetermined first progress increment of the first task according to the target user group information; adjust the initial first task progress according to the first progress increment to acquire the adjusted first task progress, wherein the adjusted first task progress is greater than the initial first task progress; determine a first resource increment value corresponding to the first progress increment, and increase an initial first application resource value of the first task according to the first resource increment value to acquire a total value of the first application resource; and perform, when the first task progress reaches a predetermined completion progress, allocation processing of the first application resource for the client according to the total value of the first application resource corresponding to the first task progress Therefore, the completion rate of the application tasks is increased, and the utilization rate of the applications is further increased.

The electronic device may compile computer program codes for executing the operations of the present disclosure in one or more programming languages or combinations thereof, including but not limited to object-oriented programming languages, such as Java, Smalltalk and C++, and conventional procedural programming languages, such as "C" language or similar programming languages. The program codes may be completely executed on a user computer, partially executed on the user computer, executed as an independent software package, partially executed on the user computer and partially executed on a remote computer, or completely executed on the remote computer or server. In the case of involving the remote computer, the remote computer may be connected to the user computer through any type of network, including an LAN or a WAN, or may be connected to an external computer (for example, connected by Internet with an Internet service provider).

The flowcharts and block diagrams in the drawings illustrate the architectures, functions and operations of possible implementations of systems, methods and computer program products according to various embodiments of the present disclosure. In this regard, each block in the flowchart or block diagram may represent a module, a program segment, or a part of code which contains one or more executable instructions for implementing specified logical functions. It should also be noted that in some alternative implementations, the functions noted in the blocks may occur in a different order than those noted in the drawings. For example, two blocks shown in succession may actually be executed substantially in parallel, and they may sometimes be executed in the reverse order, depending on the functions involved. It should also be noted that each block in the block diagrams and/or flowcharts and combinations of the blocks in the block diagrams and/or flowcharts may be implemented by a dedicated hardware-based system that executes specified functions or operations, or by a combination of dedicated hardware and computer instructions.

The units described and involved in the embodiments of the present disclosure may be implemented by means of software or hardware. Names of the units do not constitute any limitation to the units per se in some cases.

The functions described above herein may be at least partially executed by one or more hardware logic components. For example, without limitation, usable exemplary hardware logic components include: a field programmable gate array (FPGA), an application specific integrated circuit (ASIC), an application specific standard product (ASSP), a system-on-chip (SOC), a complex programmable logic device (CPLD) and the like.

In the context of the present disclosure, the machine-readable medium may be a tangible medium that may contain or store a program for use by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more lines, a portable computer disk, a hard disk, an RAM, an ROM, an EPROM or flash memory, an optical fiber, a CD-ROM, an optical storage device, a magnetic storage device, or any suitable combination of the above.

The above only describes preferred embodiments of the present disclosure and is an illustration of the technical principles utilized. It should be understood by those skilled in the art that the disclosure scope involved in the present disclosure is not limited to technical solutions formed by a particular combination of the above technical features, but also covers other technical solutions formed by any combination of the above technical features or their equivalent features without departing from the above disclosed concept, for example, a technical solution formed by interchanging the above features with (but not limited to) technical features with similar functions disclosed in the present disclosure.

Furthermore, while the operations are depicted using a particular order, this should not be construed as requiring that the operations be performed in the particular order shown or in sequential order of execution. Multitasking and parallel processing may be advantageous in certain environments. Similarly, while several specific implementation details are included in the above discussion, these should not be construed as limiting the scope of the present disclosure. Certain features described in the context of separate embodiments may also be implemented in combination in a single embodiment. Conversely, various features described in the context of a single embodiment may also be implemented in multiple embodiments, either individually or in any suitable sub-combination.

Although the present subject matter has been described using language specific to structural features and/or method logical actions, it should be understood that the subject matter limited in the appended claims is not necessarily limited to the particular features or actions described above. Rather, the particular features and actions described above are merely example forms of implementing the claims.

## Claims

1. A method for processing application resource allocation, **characterized by** comprising the following steps:
in response to acquiring an invoking operation for an application resource allocation function, determining target user group information to which a client corresponding to the invoking operation belongs, and acquiring an initial first task progress of a first task;
in response to that the target user group information belongs to predetermined user group information and the initial first task progress is not in a predetermined completion state, determining a first progress increment of the predetermined first task according to the target user group information;
adjusting the initial first task progress according to the first progress increment to acquire the adjusted first task progress, wherein the adjusted first task progress is greater than the initial first task progress;
determining a first resource increment value corresponding to the first progress increment, and increasing an initial value of a first application resource of the first task according to the first resource increment value to acquire a total value of the first application resource; and
in response to that the first task progress reaches a predetermined completion progress, performing allocation processing of the first application resource for the client according to the total value of the first application resource corresponding to the first task progress.

2. The method according to claim 1, **characterized in that** in response to that the first task progress does not reach the predetermined completion progress, the method further comprises:
in response to acquiring a task execution instruction of the client for the first task, determining a second progress increment and a second resource increment value which correspond to the task execution instruction of the first task; and
adjusting the first task progress according to the second progress increment, and increasing the total value of the first application resource according to the second resource increment value.

3. The method according to claim 1, **characterized by**, in response to acquiring the invoking operation for the application resource allocation function, further comprising:
determining a predetermined second task corresponding to the client, wherein the second task is in a fully uncompleted state under an initial second task progress of the second task;
in response to acquiring a task execution instruction of the client for the second task, determining a third progress increment and a third resource increment value which correspond to the task execution instruction of the second task; and
adjusting the second task progress according to the third progress increment, and increasing the total value of the first application resource according to the third resource increment value.

4. The method according to claim 3, **characterized by**, before performing the allocation processing of the first application resource for the client according to the corresponding total value of the first application resource, further comprising:
determining that the second task progress of the second task reaches the predetermined completion progress.

5. The method according to claim 1, **characterized by** further comprising:
in response to acquiring a task execution cancellation instruction of the client for the first task, determining a progress cancellation amount corresponding to the task cancellation instruction;
determining an application resource decrement value corresponding to the progress cancellation amount; and
reducing the first task progress according to the progress cancellation amount, and reducing the total value of the first application resource according to the application resource decrement value.

6. The method according to claim 3, **characterized by**, before both the second task progress and the first task progress reach the predetermined completion progress, further comprising:
determining a predetermined third task corresponding to the client;
in response to acquiring a task execution instruction of the client for the third task, determining a fourth resource increment value corresponding to the task execution instruction of the third task; and
increasing the total value of the first application resource according to the fourth resource increment value.

7. The method according to claim 6, **characterized by** further comprising:
after acquiring the task execution instruction, detecting whether the client satisfies a predetermined application resource pushing condition of a second application resource, wherein the application resource pushing condition comprises that completed task content corresponding to the task execution instruction belongs to predetermined task content, and/or acquisition time of the task execution instruction belongs to pushing time of the second application resource;
in accordance with a determination that the client satisfies the application resource value pushing condition, determining the second application resource to be collected by the client; and
controlling the client to display a collection prompt message for the second application resource.

8. The method according to any one of claims 1 to 7, **characterized by** further comprising:
after acquiring the task execution instruction, determining next task content to be completed of a target task corresponding to the task execution instruction; and
generating task execution prompt information for the task content to be completed, and controlling the client to display the task execution prompt information.

9. The method according to any one of claims 1 to 7, **characterized by** further comprising:
after acquiring the task execution instruction, detecting whether the client satisfies a predetermined resource collection condition of the first application resource;
in accordance with a determination that the predetermined resource collection condition is satisfied, controlling the client to display resource early-collection prompt information for the first application resource;
in response to acquiring a resource early-collection confirmation instruction executed by the client according to the resource early-collection prompt information, determining an early-collection resource value, wherein the early-collection resource is less than the total value of the first application resource to be allocated currently for the client; and
performing the allocation processing of the first application resource for the client according to the early-collection resource value, and reducing the total value of the first application resource to be allocated currently for the client according to the early-collection resource value.

10. The method according to any one of claims 1 to 7, **characterized in that** performing the allocation processing of the first application resource for the client according to the corresponding total value of the first application resource comprises:
controlling the client to display a resource collection page of a value of the first application resource, wherein the resource collection page comprises a resource collection entry and a pushing entry;
in response to acquiring a trigger instruction of the client for the resource collection entry, allocating the first application resource to a predetermined resource pool of the client according to the total value of the first application resource; and
in response to acquiring a trigger instruction of the client for the pushing entry, determining at least one pushing object according to the value of the first application resource to be collected, wherein a resource difference between a predetermined application resource value of each pushing object and the total value of the first application resource is less than a predetermined difference threshold, and controlling the client to display push information corresponding to the at least one pushing object.

11. An apparatus for processing application resource allocation, **characterized by** comprising:
a first determination module configured to determine, in response to acquiring an invoking operation for an application resource allocation function, target user group information to which a client corresponding to the invoking operation belongs;
a first acquisition module configured to acquire an initial first task progress of a first task;
a second determination module configured to determine, in response to that the target user group information belongs to predetermined user group information and the initial first task progress is not in a predetermined completion state, a predetermined first progress increment of the first task according to the target user group information;
a progress adjustment module configured to adjust the initial first task progress according to the first progress increment to acquire the adjusted first task progress, wherein the adjusted first task progress is greater than the initial first task progress;
a second acquisition module configured to determine a first resource increment value corresponding to the first progress increment, and increase an initial value of first application resource of the first task according to the first resource increment value to acquire a total value of the first application resource; and
a resource allocation processing module configured to perform, in response to that the first task progress reaches a predetermined completion progress, allocation processing of the first application resource for the client according to the total value of the first application resource corresponding to the first task progress.

12. An electronic device, **characterized by** comprising:
a processor; and
a memory for storing executable instructions of the processor;
the processor configured to read the executable instructions from the memory and execute the executable instructions to implement the method for processing application resource allocation according to any one of claims 1 to 10.

13. A computer-readable storage medium, **characterized in that** the computer-readable storage medium stores a computer program, and the computer program is configured to execute the method for processing application resource allocation according to any one of claims 1 to 10.
